# EUROPÄISCHE PATENTSCHRIFT

(11) **EP 0 866 193 B1**
(45) Veröffentlichungstag und Bekanntmachung des Hinweises auf die Patenterteilung: **09.07.2003**
(21) Anmeldenummer: 98101662.9
(22) Anmeldetag: 31.01.1998
(51) Int. Cl.: E04D 13/08, E03B 3/02, B01D 35/02

(54) **Filtersammler**
Filter collector
Collecteur du filtre

(30) Priorität: 17.03.1997 DE 29704831 U
(43) Veröffentlichungstag der Anmeldung: 23.09.1998
(73) Patentinhaber: Winkler, Norbert, D-63699 Kefenrod (DE)
(72) Erfinder: Winkler, Norbert, D-63699 Kefenrod (DE)
(74) Vertreter: Schlagwein, Udo, Dipl.-Ing.

(56) Entgegenhaltungen:
- DE-A- 2 908 620
- DE-A- 3 812 136
- DE-U- 9 307 648

## Beschreibung

Die Erfindung betrifft einen Filtersammler bestehend aus einem Gehäuse mit Oberteil und Gehäusetopf, der einen Filtereinsatz aufnimmt, wobei im Gehäusetopf ein Stauraum angeordnet ist, der über einen Ausflußstutzen entleert werden kann.

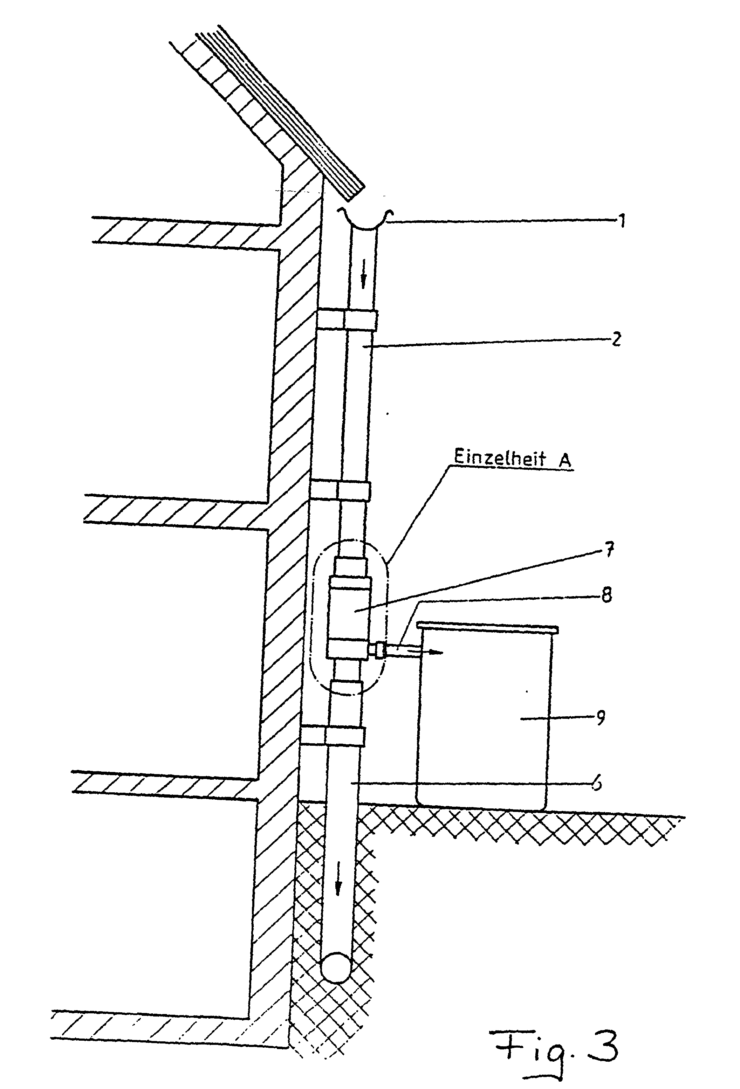

Aus der deutschen Offenlegungsschrift DE-A-38 12 136 (Winkler) ist ein Verfahren und eine Vorrichtung zur Regenwassererfassung bekannt, bei der das in einem Filtersammler getrennte Reinwasser oberhalb des Erdreiches abgeleitet und in einen Speicher 9 eingefüllt wird. Ein Prinzipbild einer derartigen Wasserführung ist aus der beiliegenden Figur 3 bekannt.

Vor der Abtrennung befindet sich das Reinwasser in einem sogenannten "Stauraum" des Filtersammlers, der von der Außenwand des Filtergehäuses und der Innenwand eines Durchlaßstutzens gebildet wird.

Gemäß Figur 4 der bereits erwähnten deutschen Offenlegungs-schrift DE-A-38 12 136 endet die Siebeinrichtung 4.2 oberhalb eines Abweiskragens 4.5, der im Endbereich 4.6 der Siebeinrichtung angeordnet ist und dabei zwei Funktionen aufweist:
1. Überleitung des abgetrennten Reinwasser in den Stauraum und von dort über den Auslaufstutzen 5.1 in die Auslaßleitung 8 (Oberseite des Abweiskragens 4.5);
2. Rücklauf des Überschußwassers aus dem Speicher 9 über Spalt 5.4 zwischen dem Abweiskragen 4,5 bzw. dem Endbereich des konischen Stützrohres 4.9 (Unterseite des Abweiskragens 4.5).

Dieser Filtertyp hat sich zwar bewährt, ist aber für manche Anwendungsfälle, wie z.B. Regenwasser mit hohem Faseranteil oder bei großen Regenwassermengen nur bedingt einsetzbar.

Bei Regenschauern mit großen Wassermengen, z.B. mehr als 100 mm/m², besteht die Gefahr des Rückstaus, wodurch der Wirkungsgrad des Filtersammlers herabgesetzt wird. Da in manchen Gegenden die Zahl der sogenannten "Dauerregenfälle" zugenommen hat, besteht Bedarf an einer speziellen Weiterentwicklung des bekannten Regensammlers für solche Anwendungsfälle, die Gefahr der Rückstaubildung vermieden wird.

Diese Aufgabe wird durch einen Filtersammler mit den im Patentanspruch 1 angegebenen Merkmalen gelöst. Es hat sich gezeigt, daß durch eine Verlängerung des Stauraumes und gleichzeitigem Verzicht des Rücklaufes der Rückstaueffekt vermieden werden kann.

Im folgenden wird die Erfindung anhand eines Ausführungsbeispieles näher erläutert. Es zeigen:
- Fig. 1: Prinzipbild einer erfindungsgemäßen Anordnung für einen Standrohrfilter;
- Fig. 2: Querschnitt durch den erfindungsgemäßen Standrohrfilter;
- Fig. 3: Prinzipbild eines bekanntes Filtersammlers mit einem Fallrohr und einer obererdigen Reinwasserableitung;
- Fig. 4: Querschnitt durch ein bekanntes Filtersystem mit einem kurzen Stauraum.

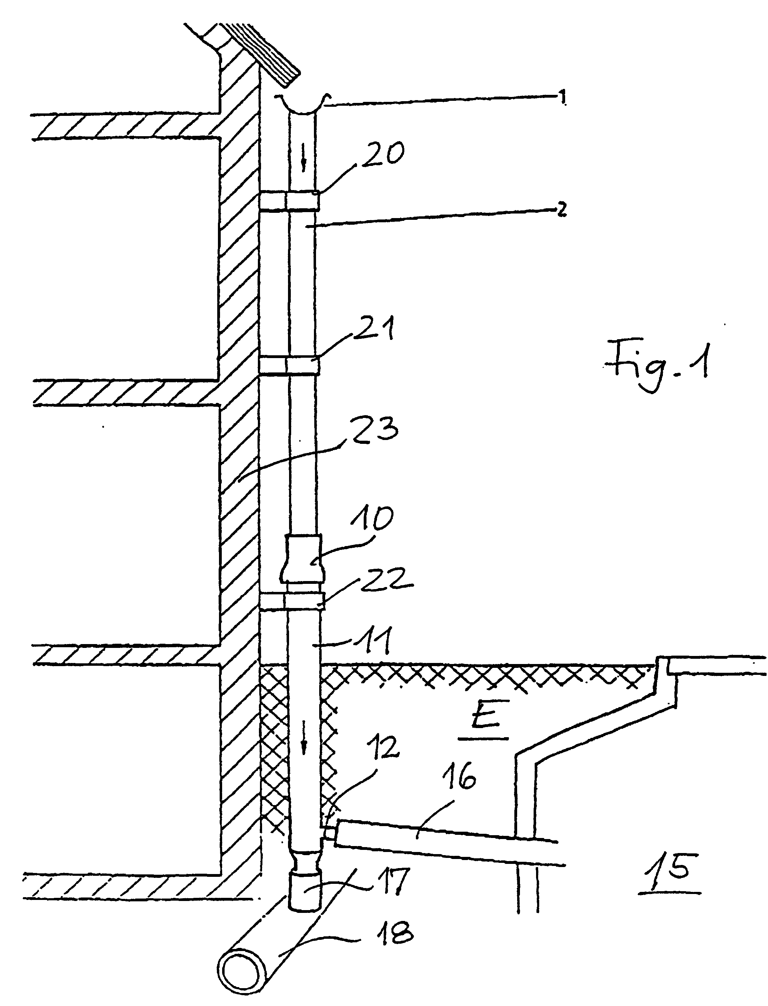

In Figur 1 ist ein Beispiel für die erfindungsgemäße Anordnung eines Standrohrfilters in Verbindung mit einer Zysterne dargestellt. In der prinzipiellen Darstellung trägt die Regenrinne das Bezugszeichen 1, das Fallrohr 2, wobei die Fallrohrmanschetten 20, 21, 22 an der Hauswand 23 befestigt sind.

Oberhalb des Erdreiches E ist das Oberteil des Filtersammlers zu erkennen, der mit einem Gehäusetopf lösbar verbunden ist. Zu Reinigungszwecken wird das Oberteil 10 auf dem Fallrohr 2 nach oben geschoben, so daß der darunter befindliche Filtereinsatz herausgezogen werden kann.

Im Erdreich E verbleibt der untere Teil des Standrohrfilters 11. Dabei ist der Ausflußstutzen 12 für das Reinwasser über eine Leitung 16 mit der Zisterne 15 verbunden, während ein Anschluß 17 den über das Fallrohr 2 durch den Standrohrfilter 11 hindurchgeleiteten Schmutzanteil in den Kanal 18 überführt.

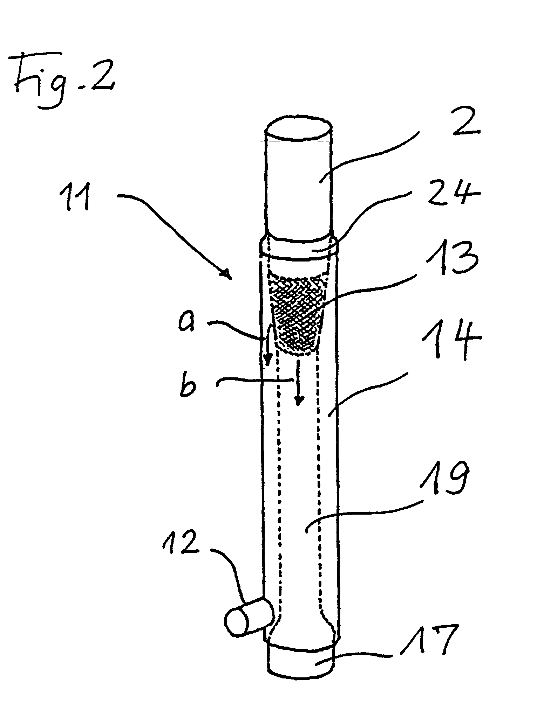

Anhand der Figur 2 kann die Funktion des Standrohrfilters näher erläutert werden. Das aus dem Fallrohr 2 ankommende Regenwasser wird in dem Filtereinsatz 13 in einen Reinwasser- (Pfeil A) und einen Schmutzwasseranteil (Pfeil B) aufgeteilt. Beide Ströme A, B fließen zunächst in dem als doppelwandiger Hohlzylinder ausgebildeten Standrohrfilter 11 in vertikaler Richtung parallel zueinander. Dabei sammelt sich der Reinwasseranteil im Stauraum 14, während der Schmutzwasseranteil durch das Innenrohr 19 ungehindert über den Anschluß 17 in den Kanal überführt wird.

Am Ende des Stauraums 14 befindet sich der Ausflußstutzen 12 für den Reinwasseranteil, der über eine Leitung mit der Zisterne verbunden werden kann.

Gemäß Figur 3 ist die Regenrinne 1 über ein Fallrohr 2 mit dem bekannten Filtersammler 7 verbunden. Das Reinwasser geht über den Auslaßkanal 8 in einen Sammelbehälter 9, der oberhalb der Erdoberfläche E aufgestellt ist.

Das Schmutzwasser verläßt den Filtersammler 7 über ein Ablaufrohr 6, das im Erdreich an den Kanal (nicht dargestellt) angeschlossen ist.

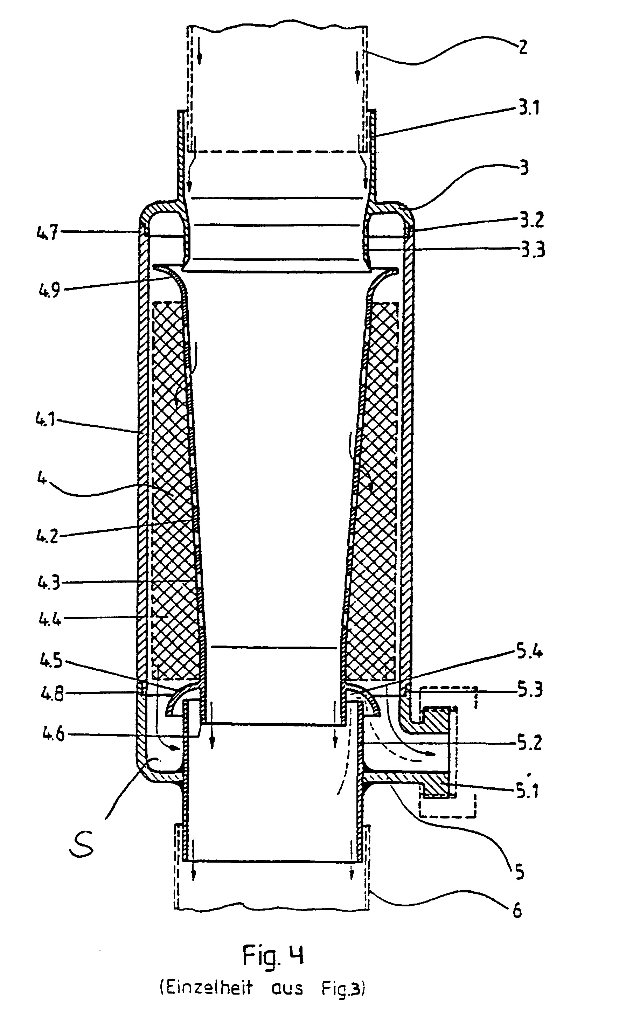

Figur 4 zeigt die Einzelheit A nach Figur 1 eines bekannten Filtersammlers. Das Fallrohr 2 mündet in einen Einlaßstutzen 3.1 des Deckels 3 des bekannten Filtersammlers von wo es in ein konisches Stützrohr 4.9 gelangt.

Wie durch die Pfeilrichtung angedeutet, tritt das Reinwasser durch Sieböffnungen 4.3 der Siebeinrichtung 4.2 in das Mittelteil 4 der Regenwassertrenneinrichtung 4.4 über. Von dort gelangt es zu einem Abweiskragen 4.5 in einem zwischen dem Ausgangsstutzen 5.2 und der Steckverbindung 4.8 sich ausbildenden Stauraum S. Der Inhalt dieses Stauraums S wird über den Auslaufstutzen 5.1 in Richtung Sammelbehälter entleert.

Aus der den Zustand bei der bekannten Filtereinreichtung wiedergebenden Figur 4 ist ersichtlich, daß bei einem Rückstau das Reinwasser entlang der gestrichelten Linie vom Auslaufstutzen 5.1 über die Kante des Ausgangsstutzens 5.2 in den unteren Abschnitt der Siebeinrichtung gelangt und von dort in das Fallrohr 6 überführt wird. Es ist somit deutlich, daß bei erheblich anfallenden Wassermengen die Effezienz der bekannten Siebeinrichtung absinkt.

Mit dem neuen in Figuren 1 und 2 dargestellten Standrohrfiltern kann dies wesentlich verbessert werden.

## Patentansprüche

1. Filtersammler, bestehend aus einem Gehäuse mit Oberteil (10) und Gehäusetopf, der einen Filtereinsatz (13) aufnimmt, wobei im Gehäusetopf ein Stauraum (14) unterhalb des Filtereinsatzes (13) angeordnet ist, der über einen Ausflußstutzen (12) entleert werden kann,
**dadurch gekennzeichnet,**
**daß** der Filtersammler als teilbarer Standrohrfilter (11) ausgebildet ist, wobei der Filtereinsatz (13) oberhalb der Erdoberfläche von außen aus dem verschiebbaren Oberteil (10) entnehmbar ist, während der unterhalb des Filtereinsatzes angeordnete Teil des Filtersammlers als Standrohr im Erdreich fest verankert ist
und **daß** der Stauraum (14) von einem doppelwandigen Zylinder gebildet wird, dessen Außenwand in die Wandung des Gehäusetopfes übergeht und dessen Innenwand zumindest bis an die Erdoberfläche reicht, wobei der Ausflußstutzen (12) am unteren Ende des Stauraums angeordnet ist.

2. Filtersammler nach Anspruch 1,
**dadurch gekennzeichnet,**
**daß** der Ausflußstutzen (12) im Erdreich mit der Zisterne verbunden ist.

3. Filtersammler nach Anspruch 1 oder 2,
**dadurch gekennzeichnet,**
**daß** der untere Rand des Filtersammlers auf dem oberen Rand der Innenwand des Stauraumes (14) aufgesteckt ist.

4. Filtersammler nach einem der vorhergehenden Ansprüche,
**dadurch gekennzeichnet,**
**daß** zwischen dem Fallrohr (2) und dem Filtereinsatz (13) ein Paßstück (24) angeordnet ist.

5. Filtersammler nach einem der vorhergehenden Ansprüche,
**dadurch gekennzeichnet,**
**daß** als Filtereinsatz (13) ein Edelstahlfilter mit einer Maschenweite von 150 - 450 µm verwendet wird.

## Claims

1. Filter-collector consisting of a casing with an upper part (10) and a casing pot which holds a filter insert (13), a reservoir (14) which can be emptied through a discharge connection (12) being arranged below the filter insert (13) within the casing pot,
**characterized in that**
the filter-connector is configured as a separable downpipe filter (11), wherein the filter insert (13) is removable from the displaceable upper part (10) from the exterior above ground level, whilst the part of the filter-collector arranged below the filter insert is fixedly anchored in the ground as a vertical downpipe,
and **in that** the reservoir (14) is formed by a double-walled cylinder whose outer wall merges into the wall of the casing pot and whose inner wall reaches down at least to ground level, the discharge connection (12) being arranged at the lower end of the reservoir.

2. Filter-collector according to Claim 1,
**characterized in that**
the discharge connection (12) is connected below ground to the cistern.

3. Filter-collector according to Claim 1 or 2,
**characterized in that**
the lower rim of the filter-collector is mounted on the upper rim of the inner wall of the reservoir (14).

4. Filter-collector according to any one of the preceding claims,
**characterized in that**
an adapter (24) is arranged between the fall pipe (2) and the filter insert (13).

5. Filter-collector according to any one of the preceding claims,
**characterized in that**
the filter insert (13) used is a stainless-steel filter with a mesh width of 150 - 450 µm.

## Revendications

1. Collecteur filtrant, comprenant un corps avec partie supérieure (10) et pot de corps qui reçoit une cartouche filtrante (13), une capacité de retenue (14) disposée dans le pot de corps au-dessous de la cartouche filtrante (13) pouvant être vidée par l'intermédiaire d'une tubulure d'écoulement (12), **caractérisé en ce qu'**il est conçu comme un filtre de tuyau vertical (11) divisible, la cartouche filtrante (13) pouvant être enlevée de la partie supérieure (10) déplaçable de l'extérieur au-dessus de la surface de la terre, tandis que la partie du collecteur filtrant disposée au-dessous de la cartouche filtrante est ancrée de manière fixe dans la terre comme un tuyau vertical et **en ce que** la capacité de retenue (14) est formée par un cylindre à double paroi, dont la paroi extérieure passe à la paroi du pot de corps et dont la paroi intérieure va au moins jusqu'à la surface de la terre, la tubulure d'écoulement (12) étant disposée à l'extrémité inférieure de la capacité de retenue.

2. Collecteur filtrant selon la revendication 1, **caractérisé en ce que** la tubulure d'écoulement (12) est reliée dans la terre avec la citerne.

3. Collecteur filtrant selon la revendication 1 ou 2, **caractérisé en ce que** le bord inférieur du collecteur filtrant est enfoncé sur le bord supérieur de la paroi intérieure de la capacité de retenue (14).

4. Collecteur filtrant selon l'une quelconque des revendications précédentes, **caractérisé en ce qu'**une pièce d'ajustement (24) est disposée entre le tuyau de descente (2) et la cartouche filtrante (13).

5. Collecteur filtrant selon l'une quelconque des revendications précédentes, **caractérisé en ce qu'**on utilise, comme cartouche filtrante (13), un filtre en acier spécial d'une ouverture de maille de 150 à 450 µm.
